# DEMANDE DE BREVET EUROPEEN

(11) **EP 4 742 276 A1**
(43) Date de publication de la demande: **13.05.2026**
(21) Numéro de dépôt: 25214542.0
(22) Date de dépôt: 10.11.2025
(51) Int. Cl.: H01B 3/44, H01B 13/14

(54) **PRÉPARATION D'UN CÂBLE ÉLECTRIQUE PAR EXTRUSION CONTINUE D'UNE COUCHE ISOLANTE THERMOPLASTIQUE ET D'UNE GAINE EXTERNE THERMOPLASTIQUE**

(30) Priorité: 12.11.2024 FR 2412349
(71) Demandeur: Nexans, 92400 Courbevoie (FR)
(72) Inventeur: PEREGO, Gabriele, 92400 COURBEVOIE (FR); CACCIOTTI, Mauro, 92400 COURBEVOIE (FR); SADIK, Tarik, 92400 COURBEVOIE (FR)
(74) Mandataire: Cabinet Boettcher

(57) **Abrégé**

La présente invention concerne un procédé de fabrication en continu d'un câble électrique (1) comprenant un élément électriquement conducteur allongé (2), une couche isolante (3) entourant ledit élément électriquement conducteur allongé ; et une gaine (4) entourant ladite couche isolante , et dans lequel :
- la couche isolante (3) est extrudée autour dudit élément électriquement conducteur allongé (2), à partir d'une première composition polymère thermoplastique C1 non réticulable ; et
- la gaine (4) est extrudée autour de la couche isolante (3) , à partir d'une deuxième composition polymère thermoplastique C2 non réticulable, distincte de la composition C1.

## Description

La présente invention concerne le domaine de la préparation des câbles électriques qui présentent un élément électriquement conducteur allongé revêtu par une couche isolante polymère, elle-même revêtue par une gaine polymère. L'invention concerne plus précisément un procédé d'extrusion permettant une application de la couche et de la gaine selon un mode continu.

L'invention s'applique typiquement, mais non exclusivement, aux câbles électriques destinés au transport d'énergie, et notamment aux câbles d'énergie à basse tension (à savoir véhiculant un courant continu ou alternatif ayant typiquement une tension inférieure ou égale à 6 kV), et qui peuvent par exemple être employés dans les domaines du transport d'électricité aérien, sous-marin, terrestre, ou encore dans l'aéronautique.

Un câble de transport d'énergie à basse tension comprend de préférence :
- un élément électriquement conducteur allongé (par exemple un fil ou un ensemble de fils toronés ensemble), notamment en cuivre ou en aluminium ;
- une couche polymère électriquement isolante entourant ledit élément électriquement conducteur allongé ; et
- de préférence une gaine de protection électriquement isolante entourant ladite couche électriquement isolante.

La présente invention concerne des câbles de ce type comprenant une couche isolante polymère, revêtue par une gaine polymère.

Les couches isolantes de tels câbles étaient historiquement à base de polyéthylène, notamment à base de polyéthylène réticulé (XLPE), qui présente l'avantage d'être facile à manipuler et de conduire à de bonnes propriétés électriques pour la couche isolante. La réticulation induit de plus de bonnes propriétés physiques au polyéthylène. En particulier, les câbles à base de XLPE câbles peuvent être utilisés à des températures de fonctionnement pouvant aller jusqu'à 90°C en mode continu du fait de la réticulation, alors que la température d'utilisation d'un câble à base de LDPE n'excède généralement pas 70°C en mode continu.

Cela étant, le polyéthylène réticulé présente des inconvénients. En plus du fait qu'il est difficilement recyclable (la réticulation fait perdre au polyéthylène son caractère thermoplastique), le polyéthylène réticulé de type XLPE nécessite une étape de réticulation (vulcanisation) qui limite la vitesse de production des câbles à base de XLPE.

Typiquement, pour la réalisation d'une couche isolante à base de XLPE autour d'un élément conducteur électrique allongé, la couche isolante en formation doit séjourner dans une chambre de vulcanisation où s'opère la réticulation de la couche afin d'atteindre un niveau de réticulation suffisant.

La réticulation requise doit d'abord être atteinte avant d'appliquer la gaine de protection autour de la couche isolante.

Par conséquent, la vitesse de production des câbles à base de XLPE réticulé est limitée par la vitesse à laquelle s'opère la réticulation dans les chambres de vulcanisation. La nécessité d'employer des chambres de vulcanisation se traduit par ailleurs en termes d'encombrement de l'installation.

Par ailleurs, la mise en œuvre d'une composition réticulable pour la préparation de la couche isolante induit un risque de début de réticulation précoce dans l'extrudeuse avec un échauffement associé qu'il convient d'éviter. A défaut, une réticulation précoce implique souvent un arrêt de la ligne de production pour effectuer un nettoyage de l'extrudeuse. Ces considérations limitent également la vitesse de production.

De plus, en employant une couche isolante réticulée, le procédé implique des étape de vérification du fait qu'une réticulation adéquate est obtenue, ce qui complexifie le procédé (qui implique non seulement une extrusion, mais aussi une étape ultérieure de vérification de la couche obtenue), ce qui se traduit notamment en termes d'augmentation des coûts de procédé.

Ces difficultés sont inhérentes à l'emploi d'un polyéthylène réticulé. La réduction de la taille des chambres de vulcanisation est difficilement envisageable, de même qu'une diminution du temps de séjour de la couche en cours de réticulation au sein de chambres, notamment si on souhaite éviter tout risque de réticulation incomplète ou de fluctuation dans le taux de réticulation du XLPE appliqué.

De ce fait, les lignes de production de câbles à basse tension à base de XLPE ont des capacités et une vitesse de production limitées.

Un but de la présente invention est de fournir une nouvelle méthode permettant d'augmenter la vitesse de production de câbles à basse tension et la capacité des lignes de production de tels câbles.

A cet effet, il est proposé selon la présente invention d'appliquer par extrusion une couche polymère thermoplastique non réticulable, pour former une couche isolante non réticulée, et d'appliquer sur cette couche non réticulée isolante une autre couche thermoplastique, qui forme ainsi une gaine autour de la couche isolante, ce qui permet d'envisager un mode d'application en continu des deux couches thermoplastiques appliquée.

.Plus précisément, selon un premier aspect, la présente invention a pour objet un procédé de fabrication en continu d'un câble électrique comprenant un élément électriquement conducteur allongé, une couche isolante entourant ledit élément électriquement conducteur allongé ; et une gaine entourant ladite couche isolante , et dans lequel :
- la couche isolante (3) est extrudée autour dudit élément électriquement conducteur allongé (2), à partir d'une première composition polymère thermoplastique C1 non réticulable ; et
- la gaine est extrudée autour de la couche isolante , à partir d'une deuxième composition polymère thermoplastique C2 non réticulable, distincte de la composition C1.

Le câble peut en outre comprendre au moins une couche de blindage agencée par exemple entre la couche isolante et la gaine.

Selon un autre aspect, l'invention a pour objet les câbles électriques du type obtenus selon le procédé défini ci-dessus (à savoir les câbles électriques susceptibles d'être obtenus selon ce procédé).

De préférence, dans le câble préparé selon le procédé de l'invention, la gaine polymère thermoplastique est en contact direct avec la couche isolante thermoplastique. Dans ce cas, la gaine est extrudée à partir de la composition C2 directement sur la couche isolante obtenue à partir de la composition C1.

Quel que soit le mode de mise en œuvre du procédé de l'invention, l'emploi spécifique d'une composition C1 non réticulable qui est fait selon l'invention autorise une application sans délai de la couche à base de la composition C2, contrairement au cas des couches isolantes à base de XLPE réticulé précité qui nécessitent un important temps de « murissement » (réticulation) préalablement à l'application ultérieure.

Concrètement, en s'affranchissant de l'emploi d'une couche réticulée, l'invention permet d'augmenter la vitesse de production par rapport à la vitesse obtenue avec les câbles à base de XLPE, typiquement de l'ordre d'au moins 30%.

De plus, l'emploi des compositions C1 et C2, qui sont thermoplastiques et non réticulables, autorise une mise en œuvre sans interruption et donc une application en continu des couches thermoplastiques à base des compositions C1 et C2 sans interruption.

Par ailleurs, l'emploi de compositions non réticulables permet de s'affranchir des risques et exigences de contrôle liés à l'emploi des compositions réticulables. En particulier, les compositions C1 et C2 non réticulables ne peuvent pas conduire aux phénomènes de réticulation précoce potentiellement observables avec les compositions réticulables. Elles permettent donc d'éviter le risque existant avec les compositions réticulables d'avoir à arrêter la chaîne de production pour opérer un nettoyage de l'extrudeuse en cas de réticulation précoce. Par ailleurs, avec les compositions C1 et C2 non réticulables, la composition des couches déposées est contrôlée, sans le risque potentiel de fluctuation de composition observé avec des compositions réticulables où la composition finale de la couche est liée à un paramètre additionnel, à savoir le taux de réticulation obtenu au sein de la couche.

Avantageusement, la première composition polymère C1 est une composition thermoplastique non réticulable contenant un polymère de propylène (PP), avantageusement à hauteur d'au moins 50 %en masse de polypropylène par rapport à la masse totale de polymère dans ladite composition C1.

L'emploi d'une composition C1 à base d'un polymère de propylène est tout particulièrement intéressante dans le cadre du procédé de l'invention car elle conduit à des propriétés isolantes stables et homogènes se traduisant par de très bonnes performances de la couche isolante.

Le polymère de propylène présent dans la composition C1 peut être :
- un homopolymère de propylène ; ou
- un copolymère de propylène et d'au moins un autre comonomère distinct du propylène (par exemple l'éthylène) ; ou
- un mélange de plusieurs de ces homo- et/ou co-polymère.

Le pourcentage en masse précité s'entend pour la quantité totale d'homo-et/ou co- polymères de propylène lorsque le polypropylène employé est un mélange.

Le polymère de propylène présent dans la composition C1 peut être homophasique ou hétérophasique.

La composition C1 comprend optionnellement (et le plus souvent) d'autres polymères que des polymères de propylène ainsi que des additifs éventuels, qui sont décrits plus loin dans la présente description.

Dans le procédé de l'invention, la deuxième composition C2, à partir de laquelle est extrudée la gaine, est de préférence une composition contenant un polymère d'éthylène (PE), de préférence un HDPE.

D'autres constituants possibles de la composition C2 plus loin dans la présente description.

Quelle que soit la nature exacte des compositions C1 et C2, le procédé de l'invention peut être conduit notamment selon les deux variantes décrites ci-dessous.

Selon une première variante , le procédé de l'invention est conduit sur une ligne de production en continu, comprenant des postes successifs au travers desquels l'élément électriquement conducteur allongé est véhiculé à vitesse constante et sans temps d'arrêt et où sont mises en œuvre les étapes suivantes :
- Etape a : la couche isolante est extrudée autour dudit élément électriquement conducteur allongé dans une première extrudeuse, à partir de la première composition thermoplastique C1
- Etape b : la couche isolante extrudée obtenue en sortie de la première extrudeuse est soumise à des moyens de refroidissement ;
- Etape c: la gaine polymère thermoplastique est extrudée autour de la couche isolante telle qu'obtenue après le refroidissement de l'étape b, dans une deuxième extrudeuse, à partir de la deuxième composition thermoplastique C2.

Selon cette première variante, la température à laquelle est appliquée la composition C2 dans l'étape c reste de préférence inférieure ou égale à la température de fusion de la composition C1 utilisée pour la réalisation de la couche isolante. Pour ce faire, la composition C2 a typiquement (mais non nécessairement) une température de fusion inférieure ou égale à celle de la composition C1.

Par ailleurs, selon cette première variante, les moyens de refroidissement de l'étape(b) comprennent avantageusement une mise en contact de la couche isolante extrudée avec de l'eau. Dans ce cas, on préfère généralement que le procédé comprenne, après l'étape b et préalablement à l'étape c, un séchage de la couche isolante extrudée, de préférence sous un courant d'air.

D'autre part, il est préférable selon cette première variante que la gaine polymère extrudée obtenue en sortie de la deuxième extrudeuse soit soumise à des moyens de refroidissement, ces moyens de refroidissement incluant typiquement une mise en contact de la gaine polymère extrudée avec de l'eau.

Selon la première variante, et façon indicative, la température d'extrusion dans l'étape (a) peut être comprise entre 90 et 220°C, par exemple entre 100 et 210°C. La température d'extrusion dans l'étape (c) est avantageusement inférieure.

Par ailleurs, les pressions employées lors de l'extrusion des étapes a et c sont typiquement inférieures à 600 bars, par exemple (mais de façon non limitative) comprises entre 140 et 600 bars.

Selon une deuxième variante possible le procédé de l'invention peut être conduit sur une ligne de production en continu, comprenant des postes successifs au travers desquels l'élément électriquement conducteur allongé est véhiculé à vitesse constante et sans temps d'arrêt et où sont mises en œuvre les étapes suivantes :
- Etape 1 : la couche isolante (3) et la gaine (4) entourant cette couche isolante sont coextrudées autour dudit élément électriquement conducteur allongé (2) à l'aide d'une même tête d'extrusion, à partir de la première composition thermoplastique C1 pour la couche isolante (la composition C1 étant en général fournie à la tête d'extrusion par un premier canal d'extrusion, qui est typiquement une première vis d'extrusion) et à partir de la deuxième composition thermoplastique C2 pour la gaine (la composition C2 étant en général fournie à la tête d'extrusion par un deuxième canal d'extrusion, qui est typiquement une deuxième vis d'extrusion);
- Etape 2 : l'élément électriquement conducteur allongé (2) muni de la couche isolante (3) et de la gaine (4) obtenue en sortie de la tête d'extrusion de l'étape 1 est soumise à des moyens de refroidissement.

Selon cette deuxième variante, l'élément électriquement conducteur allongé est typiquement déplacé linéairement le long de la chaîne de production, le long de son axe longitudinal, avec une vitesse d'avancement linéaire de qui peut, par exemple et de façon non limitative, être comprise entre 20 et 200 m/min, cette vitesse d'avancement linéaire dépendant de la section du câble (une vitesse d'avancement de 50 à 100 m/min peut par exemple être employée pour un câble ayant une section de 240mm²)..

La vitesse de rotation des vis de l'extrudeuse n'est quant à elle pas limitée par l'emploi des compositions C1 et C2 et elle peut ainsi être avantageusement de l'ordre de 90 à 95% de la vitesse maximale de la vis d'extrusion..

Différentes caractéristiques de l'invention et différentes variantes envisageables sont décrites plus en détails ci-après.

### LA COMPOSITION C1

La composition C1 employée pour appliquer la couche isolante par extrusion peut typiquement comprendre un polymère de propylène homophasique (dit aussi PP homophasique ou polypropylène homophasique).

La composition C1 peut éventuellement comprendre un polymère de propylène hétérophasique (dit aussi PP homophasique ou polypropylène hétérophasique).

La composition C1 peut en outre comprendre un polymère d'éthylène additionnel

### POLYPROPYLÈNE HOMOPHASIQUE

Au sens de la présente description, on entend par « polymère homophasique », un polymère se présentant sous la forme d'une unique phase, généralement une phase sensiblement homogène. Un tel polymère homophasique au sens de la présente description se distingue des polymères dit hétérophasiques qui comprennent plusieurs phases. Un polymère homophasique au sens de la présente description exclut donc par exemple les copolymères hétérophasiques de propylène du type copolymères Adflex Q200F ou Hifax CA 7441A (LyondellBasell).

Selon un mode de réalisation possible, le polypropylène homophasique est un homopolymère de polypropylène.

Alternativement, selon un autre mode envisageable, le polypropylène homophasique est un copolymère de propylène.

À titre d'exemples de copolymères de propylène homophasique utilisable selon l'invention, on peut citer les copolymères de propylène et d'une oléfine autre que le propylène, cette oléfine pouvant notamment être choisie parmi l'éthylène ou une oléfine α différente du propylène.

Le copolymère de propylène homophasique est avantageusement un copolymère statistique.

À titre d'exemple de copolymère statistique homophasique de propylène utile selon l'invention, on peut citer celui commercialisé par la société Borealis sous la référence Bormed^{®} RB 845 MO, celui commercialisé par la société Total Petrochemicals sous la référence PPR 3221, celui commercialisé par la société Sabic sous la référence PP 620P, ou celui commercialisé par la société Repsol Isplen sous la référence RC530S2E.

Un polypropylène homophasique utile selon la présente invention peut notamment être caractérisé par son module élastique. Ce module élastique (ou module d'Young, également désigné par l'anglicisme « Tensile Modulus ») est bien connu de l'homme du métier, et peut être facilement déterminé selon la norme ISO 527-1, -2 (2012). La norme ISO 527 présente une première partie, notée « ISO 527 1 », et une deuxième partie, notée « ISO 527-2 » spécifiant les conditions d'essai relatives aux principes généraux de la première partie de la norme ISO 527.

Un homopolymère de propylène homophasique utile selon l'invention a de préférence un module élastique allant de 1250 à 1600 MPa.

Un copolymère de propylène homophasique utile selon l'invention a de préférence un module élastique allant de 600 à 1200 MPa, et de façon particulièrement préférée allant de 800 à 1100 MPa

Par ailleurs, un polypropylène homophasique utile selon l'invention a avantageusement une température de fusion supérieure à 130 °C, de façon particulièrement préférée supérieure à 135 °C, et de façon plus particulièrement préférée allant de 140 °C à 175 °C environ.

Un polypropylène homophasique utile selon l'invention peut par ailleurs avoir une enthalpie de fusion allant de 20 à 100 J/g environ. Lorsqu'il s'agit d'un homopolymère de propylène homophasique son enthalpie de fusion va de préférence de 80 à 90 J/g. Lorsqu'il s'agit d'un copolymère de propylène homophasique a de préférence une enthalpie de fusion allant de 40 à 90 J/g et de façon particulièrement préférée de 50 à 85 J/g.

Un polypropylène homophasique utile selon l'invention peut par ailleurs avoir un indice de fluidité allant de 0,5 à 3,5 g/10 min, de préférence allant de 1,0 à 2,8 g/10 min, et de façon particulièrement préférée allant de 1,2 à 2,5 g/10 min ; notamment déterminé à 230 °C environ avec une charge de 2,16 kg environ selon la norme ASTM D1238-00, ou la norme ISO 1133.

Un polypropylène homophasique utile selon l'invention peut par ailleurs avoir une densité allant de 0,81 à 0,92 g/cm³ environ, de préférence allant de 0,85 à 0,91 g/cm³, et de façon particulièrement préférée allant de 0,87 à 0,91 g/cm³ ; notamment déterminé selon la norme ISO 1183A (à une température de 23 °C).

### POLYPROPYLENE HETEROPHASIQUE

La composition polymère à partir de laquelle est formée la couche isolante du câble de l'invention peut comprendre un copolymère de propylène de nature hétérophasique. Ce copolymère de propylène, dit « hétérophasique » (ou également « hétérophasé »), comprend deux phases distinctes, avec typiquement :
- une phase continue thermoplastique à base de polypropylène (il s'agit d'une matrice thermoplastique à base d'au moins un homo- ou co-polymère de propylène) ; et
- une phase élastomère (généralement à la fois élastomère et thermoplastique) dispersée dans cette phase (matrice) continue thermoplastique.

Ce mélange hétérophasique peut être introduit dans la composition à l'état d'un mélange hétérophasique préformé (typiquement sous la forme d'un mélange commercial biphasique, généralement désigné sous le terme de « copolymère hétérophasique » dans ce cas, le mélange peut par exemple être introduit dans une extrudeuse sous la forme de granulés constitués chacun de ce mélange hétérophasique). Alternativement, les deux phases du mélange hétérophasique peuvent se former in situ suite au mélange de leurs polymères constitutifs dans les proportions conduisant à la dispersion de la phase élastomère dans la phase continue thermoplastique à base de polypropylène (par exemple en introduisant dans une extrudeuse (i) des granulés comprenant le premier polymère homophasique (ou un mélange homophasique de polymères) constitutif de la phase thermoplastique continue, et (ii) d'autres granulés ne comprenant pas le premier polymère et comprenant un second polymère homophasique (ou un second mélange homophasique de polymères) constitutif de la phase continue).

Le copolymère hétérophasique employé selon l'invention comprend au moins deux phases distinctes : l'une comprenant une matrice polymère, et l'autre comprenant typiquement des particules ou nodules dispersé(e)s dans cette matrice polymère. Ce type de polymère peut être facilement identifiable par des techniques bien connues de l'homme du métier, comme par exemple la microscopie électronique à balayage (MEB). Plus particulièrement, avec un grossissement x 10 000, il est classique d'observer lesdites particules ou nodules dispersé(e)s dans ladite matrice polymère, lesdites particules ayant avec une taille moyenne en nombre allant de 200 nm à 10 µm, par exemple entre 500 nm et 2 µm.

La phase thermoplastique constituant la matrice du copolymère de propylène hétérophasique représente en général entre 50 et 85 % en poids, avantageusement entre 55 et 80 % en poids et par exemple entre 55 et 75 % en poids par rapport au poids total du copolymère de propylène hétérophasique.

La phase élastomère thermoplastique du copolymère de propylène hétérophasique représente avantageusement au moins 15 % en poids, de préférence au moins 20 % et par exemple au moins 30 % et généralement moins de 50 % en poids, par exemple moins de 45 % en poids par rapport au poids total du copolymère de propylène hétérophasique.

Selon un premier mode de réalisation possible, la phase élastomère qui est dispersée dans phase continue thermoplastique à base de polypropylène comprend un copolymère élastomère d'éthylène et d'une oléfine α autre que l'éthylène, notamment un copolymère élastomère d'éthylène et de propylène.

Le copolymère de propylène hétérophasique employé selon ce premier mode de réalisation de préférence un module élastique allant de 50 à 1200 MPa environ, et de façon particulièrement préférée : soit un module élastique allant de 50 à 550 MPa environ, et de façon plus particulièrement préférée allant de 50 à 300 MPa environ.

Le copolymère de propylène hétérophasique employé selon ce premier mode de réalisation est en général introduit dans la composition polymère à l'état d'un mélange hétérophasique préformé. À titre d'exemple de copolymère de propylène hétérophasique préformé utile selon ce premier mode, on peut mentionner les copolymères de propylène hétérophasiques commercialisés par la société LyondellBasell sous les références Adflex^{®} Q 200 F, Hifax CA 10A, ou Hifax CA 12A.

Le polypropylène hétérophasique selon le premier mode décrit ci-dessus a de préférence une température de fusion supérieure à 140 °C environ, de façon particulièrement préférée supérieure à 145°C environ, et de façon plus particulièrement préférée allant de 150 à 175 °C environ.

Le polypropylène hétérophasique selon le premier mode décrit ci-dessus peut avoir une enthalpie de fusion allant de 20 à 100 J/g environ, et de préférence de 20 à 50 J/g environ.

Le polypropylène hétérophasique selon le premier mode décrit ci-dessus peut avoir un indice de fluidité allant de 0,5 à 5 g/10 min, et de préférence allant de 0,6 à 2 g/10 min environ ; notamment déterminé à 230° C environ avec une charge de 2,16 kg environ selon la norme ASTM D1238-00, ou la norme ISO 1133.

Le polypropylène hétérophasique selon le premier mode décrit ci-dessus peut avoir une densité allant de 0,81 à 0,92 g/cm³ environ, de préférence allant de 0,85 à 0,91 /cm³, et de façon particulièrement préférée allant de 0,87 à
0,91 g/cm³ ; notamment déterminé selon la norme ISO 1183A (à une température de 23 °C).

Selon un deuxième mode de réalisation possible, la phase élastomère qui dispersée dans phase continue thermoplastique à base de polypropylène comprend un copolymère élastomère d'éthylène et d'au moins un co-monomère porteur de groupe polaire. Selon ce mode de réalisation, la phase élastomère représente de préférence au plus 45% en poids (typiquement entre 25 et 45 %) par rapport au poids total du copolymère de propylène hétérophasique, la matrice représentant au moins 55 % en poids (typiquement entre 55 et 75 %).

Le copolymère de propylène hétérophasique employé selon ce premier mode de réalisation peut éventuellement être introduit dans la composition polymère à l'état d'un mélange hétérophasique préformé. Alternativement, selon ce second mode de réalisation, la composition polymère peut être obtenue par un mélange de (i) l'homo- ou co-polymère de propylène constitutif de la phase continue à base de polypropylène (typiquement introduit dans une extrudeuse sous forme de premiers granulats) et (ii) du polymère élastomère d'éthylène et d'au moins un co-monomère porteur de groupe polaire (typiquement introduit dans une extrudeuse sous forme de second granulats distincts des premiers), auquel cas le mélange hétérophasique se forme in situ dans la composition (typiquement par fusion et mélange des granulats dans l'extrudeuse).

Le copolymère élastomère d'éthylène et d'au moins un monomère porteur de groupes polaires utilisé dans le cadre du deuxième mode décrit ci-dessus peut notamment avoir une température de fusion inférieure à 110 °C, par exemple inférieure ou égale à 100 °C.

Le copolymère élastomère d'éthylène et d'au moins un monomères porteurs de groupes polaires utilisé dans le cadre du deuxième mode peut notamment être un polymère porteur d'une ou plusieurs fonctions polaires choisies parmi les groupements acétate, acrylate, hydroxyle, nitrile, carboxyle, carbonyle, éther, ester, silane et leurs mélanges. Un polymère d'éthylène homophasique à caractère polaire utile selon l'invention peut notamment être :
- un copolymère d'éthylène et d'acétate de vinyle (EVA) ;
- un copolymère d'éthylène et de butyle acrylate (EBA) ;
- un copolymère d'éthylène et d'éthyle acrylate (EEA) ;
- un copolymère d'éthylène et d'acrylate de méthyle (EMA) ;
- un copolymère d'éthylène et d'acide acrylique (EAA) ; ou
- un mélange de ces composés.

### POLYMÈRE D'ÉTHYLÈNE ADDITIONNEL (OPTIONNEL)

Selon un mode de réalisation envisageable, la composition polymère thermoplastique C1 peut comprendre un polymère d'éthylène homophasique,

La composition polymère peut éventuellement résulter d'un mélange des polypropylènes précédemment décrits avec un polymère d'éthylène homophasique présent typiquement à hauteur de moins de 45% en poids par rapport au poids total des polymères de la composition polymère thermoplastique.

Ce polymère d'éthylène homophasique, lorsqu'il est présent dans la composition, est typiquement un homopolymère ou un copolymère d'éthylène. Il comprend de préférence au moins 80 % en mole environ d'éthylène, de façon particulièrement préférée au moins 90 % en mole environ d'éthylène, et de façon plus particulièrement préférée au moins 95 % en mole environ d'éthylène, par rapport au nombre de moles total de monomères dans le polymère d'éthylène.

Lorsqu'un tel polymère d'éthylène homophasique est présent, il a typiquement un module élastique d'au moins 300 MPa, de préférence un module élastique d'au moins 325 MPa, et de façon particulièrement préférée d'au moins 350 MPa. Ce module élastique reste en général inférieur ou égal à 600 MPa, par exemple inférieur ou égal à 500 MPa.

Lorsqu'un polymère d'éthylène homophasique est présent dans la composition, son indice de fluidité va avantageusement de 0,5 à 5 g/10 min, et de préférence de 1 à 3 g/10 min (l'indice de fluidité auquel il est fait référence ici est celui déterminé à 230 °C environ avec une charge de 2,16 kg selon la norme ASTM D1238-00, ou la norme ISO 1133).

Lorsqu'un polymère d'éthylène homophasique est présent dans la composition, il peut par exemple s'agir d'un polyéthylène basse densité, un polyéthylène linéaire basse densité, un polyéthylène moyenne densité, ou un polyéthylène haute densité ; notamment selon la norme ISO 1183A (à une température de 23 °C).

Dans la présente description, l'expression « polyéthylène basse densité » désigne un polymère d'éthylène homophasique ayant une densité allant de 0,91 à 0,925 g/cm³ environ, ladite densité étant mesurée selon la norme ISO 1183A (à une température de 23 °C).

Dans la présente description, l'expression « polyéthylène moyenne densité » désigne un polymère d'éthylène homophasique ayant une densité allant de 0,926 à 0,940 g/cm³ environ, ladite densité étant mesurée selon la norme ISO 1183A (à une température de 23 °C).

Dans la présente description, l'expression « polyéthylène haute densité » désigne un polymère d'éthylène homophasique ayant une densité allant de 0,941 à 0,965 g/cm³, ladite densité étant mesurée selon la norme ISO 1183A (à une température de 23 °C).

Lorsqu'un polymère d'éthylène homophasique est présent dans la composition, il peut avantageusement s'agir d'un polyéthylène ayant une densité d'au plus 0,936 g/cm³, de façon particulièrement préférée d'au plus 0,930 g/cm3, et de façon plus particulièrement préférée d'au plus 0,925 g/cm³ ; ladite densité étant notamment mesurée selon la norme ISO 1183A (à une température de 23 °C), et le polymère d'éthylène homophasique est alors avantageusement un polyéthylène basse densité, un polyéthylène linéaire basse densité, ou un polyéthylène moyenne densité, et de façon particulièrement préférée un polyéthylène linéaire basse densité.

À titre d'exemple de polyéthylène linéaire basse densité, on peut citer celui commercialisé par la société Ineos sous la référence BPD 6342, celui commercialisé par la société Exxon sous la référence LL 1004YB, celui commercialisé par la société Sabic sous la référence 318B, ou celui commercialisé par la société Versalis sous la référence Flexirene CL 10.

Le polymère d'éthylène homophasique, lorsqu'il est présent est typiquement présent à une teneur entre 25 et 45 %, par exemple entre 30 et 40 % en poids par rapport au poids total des polymères de la composition polymère thermoplastique.

Lorsque la composition comprend un polymère d'éthylène homophasique, elle comprend en général systématiquement aussi un polypropylène homophasique, avec une proportion massique (i.e. une quantité en poids) du polypropylène homophasique qui reste de préférence strictement supérieure à la proportion massique (i.e. la quantité en poids) du polymère d'éthylène homophasique, par rapport au poids total de polymères dans la composition polymère.

### LA COMPOSITION C2

La composition C2 employée pour appliquer la gaine par extrusion comprend avantageusement un polymère d'éthylène (PE), de préférence un HDPE, avantageusement choisi parmi les polymères décrits à titre de polymères d'éthylène additionnels et optionnels dans la composition C1.

### ADDITIFS OPTIONNELS DANS LES COMPOSITIONS C1 ET C2

Les compositions polymères C1 et C2 à partir desquelles sont formées, respectivement, la couche isolante et la gaine du câble selon l'invention peuvent éventuellement comprendre un ou plusieurs additifs en plus des polymères précités.

Ces additifs peuvent notamment être choisis parmi des agents favorisant la mise en œuvre tels que des lubrifiants, des agents compatibilisants, des agents de couplage, des antioxydants, des agents anti-UV, des antioxydants, des agents anti-cuivre, des agents anti-arborescences d'eau, des pigments, et leurs mélanges.

La composition polymère comprend de préférence au moins un antioxydant et/ou au moins un agent anti-cuivre (également appelé désactivateur de métaux). La composition polymère peut typiquement comprendre de 0,01 à 5 % en poids environ, et de préférence de 0,1 à 2 % en poids environ d'additifs, par rapport au poids total de la composition polymère.

Les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le 1,2-bis(3,5-di-tert-butyl-4-hydroxyhydrocinnamoyl) hydrazine (Irganox^{®} MD 1024), le pentaérythritol tétrakis(3-(3,5-di-tert-butyl-4-hydroxyphényl)propionate) (Irganox^{®} 1010), l'octadécyl 3-(3,5-di-tert-butyl-4-hydroxyphényl)propionate (Irganox^{®} 1076), le 1,3,5-triméthyl-2,4,6-tris(3,5-di-tert-butyl-4-hydroxybenzyl)benzène (Irganox^{®} 1330), le 4,6-bis (octylthiométhyl)-o-crésol (Irgastab^{®} KV10 ou Irganox^{®} 1520), le 2,2'-thiobis(6-tert-butyl-4-méthylphénol) (Irganox^{®} 1081), le 2,2'- thiodiéthylène bis[3-(3,5-di-tert-butyl-4-hydroxyphényl) propionate] (Irganox^{®} 1035), le tris (3,5-di-tert-butyl-4-hydroxybenzyl) isocyanurate (Irganox^{®} 3114), le 2,2'-oxamido-bis(éthyl-3(3,5-di-tert-butyl-4-hydroxyphényle)propionate) (Naugard XL-1), ou le 2,2'-méthylènebis(6-tert-butyl-4-méthylphénol).

À titre d'exemples d'antioxydants à base de soufre, on peut citer les thioéthers tels que le didodécyl-3,3'-thiodipropionate (Irganox^{®} PS800), le distéaryl thiodipropionate ou dioctadecyl-3,3'-thiodipropionate (Irganox^{®} PS802), le bis [2-méthyle-4-{3-n-alkyle (C12 ou C14) thiopropionyloxy}-5-tert-butylphényl]sulfide, le thiobis-[2-tert-butyl-5-méthyle-4,1-phénylène] bis [3-(dodécylthio)propionate], ou le 4,6-bis(octylthiométhyle)-o-crésol (Irganox^{®} 1520 ou Irgastab^{®} KV10).

À titre d'exemples d'antioxydants à base de phosphore, on peut citer le tris(2,4-di-tert-butyl-phényle) phosphite (Irgafos^{®} 168) ou le bis(2,4-di-tert-butylphényl)pentaérythritol diphosphite (Ultranox^{®} 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl) -N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

Le désactivateur de métal peut être choisi parmi les hétérocycles aromatiques azotés, et les composés aromatiques comprenant au moins une fonction -NH-C(=O)-, et de préférence parmi les composés aromatiques comprenant au moins une fonction -NH-C(=O)-. La présence de l'oxygène dans le désactivateur de métal est importante pour pouvoir immobiliser durablement les ions métalliques.

Le désactivateur de métal est de préférence différent d'une amine encombrée. En d'autres termes, le désactivateur de métal ne comprend pas de préférence un ou plusieurs groupements tétraméthylpipéridine.

À titre d'exemples d'hétérocycliques aromatiques azotés, on peut citer les dérivés de la quinoline tels que les 2,2,4-triméthyl-1,2 dihydroquinolines polymérisées (TMQ).

À titre d'exemples de composés aromatiques comprenant au moins une fonction -NH-C(=O)-, on peut citer ceux comprenant deux fonctions -NH-C(=O)-, de préférence comprenant deux fonctions -NH-C(=O)- liées de façon covalente, et de façon plus particulièrement préférée comprenant un groupe divalent -NH-C(=O)-C(=O)-NH- ou -C(=O)-NH-NH-C(=O)-, tels que le 2,2' oxamidobis-[éthyl-3-(3,5-di-tert-butyl-4-hydroxyphényl) propionate] (Naugard XL-1), le 2',3-bis[[3-[3,5-di-tert-butyl-4-hydroxy phenyl]propionyl]] propionohydrazide ou 1,2-bis(3,5-di-tert-butyl-4-hydroxyhydrocinnamoyl) hydrazine (Irganox^{®} 1024 ou Irganox^{®} MD 1024), ou l'oxalyl bis(benzylidenehydrazide) (OABH).

Certains désactivateurs de métaux sont également des antioxydants.

En particulier lorsque la couche isolante du câble de l'invention est destinée à une application basse tension, il est préférable que la composition polymère à partir de laquelle est formée la couche isolante soit exempte de liquide diélectrique, notamment de liquides choisis parmi une huile minérale (e.g. huile naphténique, huile paraffinique ou huile aromatique), une huile végétale (e.g. huile de soja, huile de lin, huile de colza, huile de maïs ou huile de ricin), une huile synthétique telle qu'un hydrocarbure aromatique (alkylbenzène, alkylnaphtalène, alkylbiphényle, alkydiaryléthylène, par exemple), une huile de silicone, un éther oxyde, un ester organique, et un hydrocarbure aliphatique.

### BRÈVE DESCRIPTION DES DESSINS

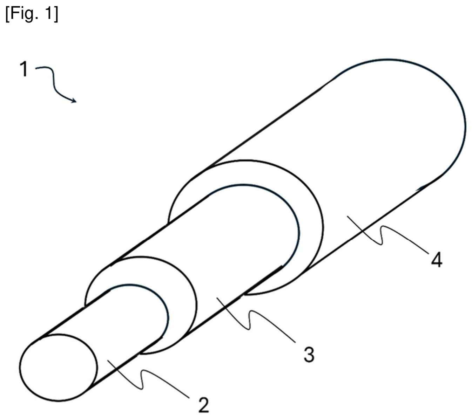

La Figure 1 ci-annexée représente les différentes couches d'un câble tel que typiquement fabriqué selon l'invention.

Pour des raisons de clarté, seuls les éléments essentiels pour la compréhension de l'invention ont été représentés, et ce de manière schématique et sans respect de l'échelle.

La Figure 1 représente un câble électrique 1 à basse tension tel qu'on peut le préparer selon l'invention.

Ce câble comporte un élément électriquement conducteur 2 allongé central, notamment en cuivre ou en aluminium ou en un de leurs alliages.

A noter que l'élément électriquement conducteur allongé d'un câble selon l'invention peut être un conducteur monocorps (par exemple un simple fil métallique du type représenté sur la Figure), mais il peut aussi s'agir par exemple d'un conducteur multicorps, incluant une pluralité de fils métalliques, torsadés (toronés entre eux) ou non.

L'élément électriquement conducteur allongé présent dans un câble selon l'invention peut notamment être en aluminium, en alliage d'aluminium, en cuivre, en alliage de cuivre, ou en une de leurs combinaisons.

Le câble électrique 1 de la Figure 1 comprend en outre une couche 3 électriquement isolante. Cette couche est obtenue dans le procédé de l'invention par extrusion à partir de la première composition thermoplastique C1.

Le câble électrique 1 de la Figure 1 comprend éventuellement une gaine extérieure de protection 4, qui est obtenue dans le procédé de l'invention par extrusion à partir de la deuxième composition thermoplastique C2.

### EXEMPLE

Un câble électrique du type illustré sur la figure a été préparé en employant le procédé de l'invention, dans les conditions suivantes, employant un procédé conduit sur une ligne de production en continu, comprenant des postes successifs suivants au travers desquels un élément électriquement conducteur allongé (fil d'aluminium) est véhiculé à vitesse constante (51,2 m/min) et sans temps d'arrêt:

### APPLICATION DE LA COUCHE ISOLANTE

Le conducteur métallique employé est un fil en aluminium d'une section de 240 mm². Ce fil a été revêtu par une couche isolante d'une épaisseur de 1,7 mm par extrusion de la couche isolante autour du conducteur

La composition, thermoplastique et non réticulable, qui a été employée pour réaliser la couche isolante comprend du polyproylène et du polyéthylène à hauteur de plus de 90%, additionné d'un copolymère d'éthylène (à hauteur de moins de plus de 1%) et moins de 0.5% d'un antioxydant.

L'extrudeuse qui a été employée pour appliquer cette composition est une extrudeuse pour le procédé Monosil, 150 - 30D (diamètre de la vis : 150mm ; longueur de la vis : 30 fois le diamètre de la vis), munie d'une vis type Monosil dotée d'un Eagan engagée dans un cylindre d'extrusion (« barrel ») de type Monosil, avec un diamètre de la filière de 18,5 mm et un diamètre de sortie de la tête d'extrusion de 22,5 mm, avec un profil de température évoluant de 100°C en entrée d'extrudeuse à 210°C au niveau de la tête d'extrusion.

### APPLICATION DE LA GAINE THERMOPLASTIQUE

Le second poste au travers duquel le fil est véhiculé permet d'appliquer une gaine thermoplastique (HDPE) autour de la couche isolante obtenue dans le premier poste.

Ce second poste met en œuvre une seconde extrudeuse dans laquelle est introduit le fil revêtu par la couche isolante extrudée déposée dans le premier poste. C'est autour de la couche isolante qu'est extrudée la gaine à base de HDPE dans le second poste.

L'extrudeuse employée dans ce second poste pour appliquer la gaine thermoplastique entourant la couche isolante est une extrudeuse de type Maillefer 150 - 24D, munie d'une vis type HDPE avec un diamètre de la filière de 18,5 mm et un diamètre de sortie de la tête d'extrusion de 22,5 mm, avec un profil de température évoluant de 160°C en entrée d'extrudeuse à 185°C au niveau de la tête d'extrusion.

Le câble obtenu présente un bon aspect et la gaine est facile à retirer (aisément « strippable »).

## Revendications

1. Procédé de fabrication en continu d'un câble électrique (1) comprenant un élément électriquement conducteur allongé (2), une couche isolante (3) entourant ledit élément électriquement conducteur allongé ; et une gaine (4) entourant ladite couche isolante , et dans lequel :
- la couche isolante (3) est extrudée autour dudit élément électriquement conducteur allongé (2), à partir d'une première composition polymère thermoplastique C1 non réticulable ; et
- la gaine (4) est extrudée autour de la couche isolante (3) , à partir d'une deuxième composition polymère thermoplastique C2 non réticulable, distincte de la composition C1.

2. Procédé selon la revendication 1, où la gaine polymère thermoplastique (4) est en contact direct avec la couche isolante thermoplastique (3).

3. Procédé selon la revendication 1 ou 2, où la première composition C1 est une composition thermoplastique non réticulable contenant un polymère de propylène (PP).

4. Procédé selon l'une des revendication 1 à 3, où la deuxième composition C2 est une composition contenant un polymère d'éthylène (PE), de préférence un HDPE .

5. Procédé selon l'une des revendication 1 à 4, qui est conduit sur une ligne de production en continu, comprenant des postes successifs au travers desquels l'élément électriquement conducteur allongé est véhiculé à vitesse constante et sans temps d'arrêt et où sont mises en œuvre les étapes suivantes :
Etape a : la couche isolante (3) est extrudée autour dudit élément électriquement conducteur allongé (2) dans une première extrudeuse, à partir de la première composition thermoplastique C1
Etape b : la couche isolante extrudée (3) obtenue en sortie de la première extrudeuse est soumise à des moyens de refroidissement ;
Etape c: la gaine polymère thermoplastique (4) est extrudée autour de la couche isolante (3) telle qu'obtenue après le refroidissement de l'étape b, dans une deuxième extrudeuse, à partir de la deuxième composition thermoplastique C2.

6. Procédé selon la revendication 5, où la composition C2 a une température de fusion inférieure à celle de la composition C1

7. Procédé selon la revendication 5 ou 6, où les moyens de refroidissement de l'étape b comprennent une mise en contact de la couche isolante extrudée avec de l'eau

8. Procédé selon la revendication 7 où, après l'étape b et préalablement à l'étape c, la couche isolante extrudée (3) qui a été mise en contact avec l'eau est séchée, de préférence sous un courant d'air.

9. Procédé selon l'une quelconque des revendications 4 à 8, où la gaine polymère extrudée (4) obtenue en sortie de la deuxième extrudeuse est soumise à des moyens de refroidissement, ces moyens de refroidissement incluant typiquement une mise en contact de la gaine polymère extrudée (4) avec de l'eau.

10. Procédé selon l'une des revendication 1 à 4, qui est conduit sur une ligne de production en continu, comprenant des postes successifs au travers desquels l'élément électriquement conducteur allongé est véhiculé à vitesse constante et sans temps d'arrêt et où sont mises en œuvre les étapes suivantes :
Etape 1 : la couche isolante (3) et la gaine (4) entourant cette couche isolante sont coextrudées autour dudit élément électriquement conducteur allongé (2) dans une même tête d'extrusion, à partir de la première composition thermoplastique C1 pour la couche isolante et à partir de la deuxième composition thermoplastique C2 pour la gaine ;
Etape 2 : l'élément électriquement conducteur allongé (2) muni de la couche isolante (3) et de la gaine (4) obtenue en sortie de la tête d'extrusion de l'étape 1 est soumis à des moyens de refroidissement.

11. Câble électrique (1) susceptible d'être obtenu selon le procédé selon l'une quelconque des revendications 1 à 10.
